# EUROPÄISCHE PATENTANMELDUNG

(11) **EP 1 001 235 A1**
(43) Veröffentlichungstag der Anmeldung: **17.05.2000**
(21) Anmeldenummer: 98121306.9
(22) Anmeldetag: 09.11.1998
(51) Int. Cl.: F25D 23/10

(54) **Kühlschrank für Wohnwagen**

(71) Anmelder: Hobby-Wohnwagenwerk Ing. Harald Striewski, 24787 Fockbeck (DE)
(72) Erfinder: Striewski, Harald, 24813 Schülp (DE)
(74) Vertreter: Stenger, Watzke & Ring Patentanwälte

(57) **Zusammenfassung**

Der Erfindung liegt die Aufgabe zugrunde, einen Kühlschrank bereitzustellen, der an nahezu beliebigen Orten in einem Wohnwagen eingebaut werden kann, auch in äußerst engen Bereichen oberhalb von Radkästen (11) und dergleichen. Zur technischen Lösung dieser Aufgabe wird ein Kühlschrank vorgeschlagen, dessen Breite größer ist als dessen Höhe und der frontseitig eine Doppeltür (6) aufweist.

## Beschreibung

Die vorliegende Erfindung betrifft einen Kühlschrank für Wohnwagen.

Bekanntermaßen haben Wohnwagen nur einen äußerst begrenzten Einbauraum für nutzbare Geräte. Insbesondere gibt es bestimmte Bereiche, beispielsweise die Bereiche über den Radkästen, die nicht für entsprechende Geräte zur Verfügung stehen, da diese üblicherweise nicht hoch genug sind. Berücksichtigt man die üblichen Nutzbereiche eines Wohnwagens, so bleiben nurmehr ganz wenige Bereiche übrig, um bestimmte erforderliche Geräte aufstellen zu können. Beispielsweise gibt es nur wenige Orte zur Aufstellung von Kühlschränken, die normalerweise Bestandteil eines Küchenblocks sind. Bekannte Kühlschränke, sofern sie ein nicht allzu kleines Volumen aufweisen, benötigen eine Aufstellhöhe vom Boden bis in den Arbeitsplattenbereich, so daß nach Abzug der üblichen Nutzbereiche in einem Wohnwagen nur wenige Aufstellorte verbleiben. Aus diesem Grunde sind bei Verwendung herkömmlicher Kühlschränke für Wohnwagen die Positionierungen von Küchenblöcken nicht variabel.

Ausgehend von diesem Stand der Technik liegt der vorliegenden Erfindung die **Aufgabe** zugrunde, einen Kühlschrank für den Einbau in Wohnwagen bereitzustellen, welcher hinsichtlich der Aufstellorte nicht beschränkt ist, so daß auch bezüglich der Küchenblöcke eine höhere Aufstellvariabilität gegeben ist. Darüber hinaus soll der Kühlschrank trotz beschränkter Einbaugröße noch ein möglichst großes Füllvolumen bereitstellen.

Zur technischen **Lösung** dieser Aufgabe wird ein Kühlschrank vorgeschlagen, dessen Breite größer ist als dessen Höhe und der frontseitig eine Doppeltür aufweist.

Der erfindungsgemäße Kühlschrank für Wohnwagen hat also eine im Vergleich zur Breite sehr geringe Höhe, läßt sich also auch in einem Bereich zwischen Radkastenoberseite und Arbeitsplattenunterseite anordnen. Dadurch wird die Anzahl möglicher Aufstellbereiche für den Kühlschrank allein oder auch für den Kühlschrank aufweisende Küchenblöcke erheblich vergrößert.

Durch die Anordnung der Doppeltür wird das trotz geringer Einbauhöhe sehr große Volumen gut zugänglich. Die Türen können klein gehalten werden und benötigen damit in dem an sich engen Wohnwagen keinen großen Schwenkbereich.

Gemäß einem weiteren vorteilhaften Vorschlag der Erfindung stoßen die Türen gegeneinander, so daß auf einen Mittelpfosten in der Kühlschrankfront verzichtet werden kann. Dadurch wird die Zugänglichkeit des Kühlvolumens erheblich verbessert.

Vorteilhafterweise wird vorgeschlagen, daß beide Türen einen Lichtschalter betätigen, so daß im Zweifel nur eine von beiden Türen geöffnet werden muß.

Gemäß einem weiteren vorteilhaften Vorschlag sind die erforderlichen Anschlüsse an Strom, Gas oder sonstige Energiequellen an einer der Seiten des Kühlschranks angeordnet, so daß diese nicht zwingend von der Rückseite her angeschlossen werden muß.

Von besonderem Vorteil ist es, wenn die Oberseite des Kühlschranks mit Ausnehmungen zur Aufnahme an der Unterseite einer Arbeitsplatte herausragender Bauteile versehen ist. Auf diese Weise ist eine optimierte Raumausnutzung gewährleistet, indem die an der Unterseite einer Arbeitsplatte herausragenden Bauteile, wie beispielsweise ein Spülbecken oder Abflußarmaturen, in den Ausnehmungen untergebracht werden.

Von Vorteil ist ferner, eine frontseitige Befestigungsleiste vorzusehen, die bedingt durch die gute Zugänglichkeit eine einfache und schnelle Montage gewährleistet.

Schließlich wird in Weiterbildung der Erfindung vorgeschlagen, den Kühlschrank hinsichtlich einer größtmöglichen Aufstellvariabilität als Einbau- oder Unterbauschrank auszubilden.

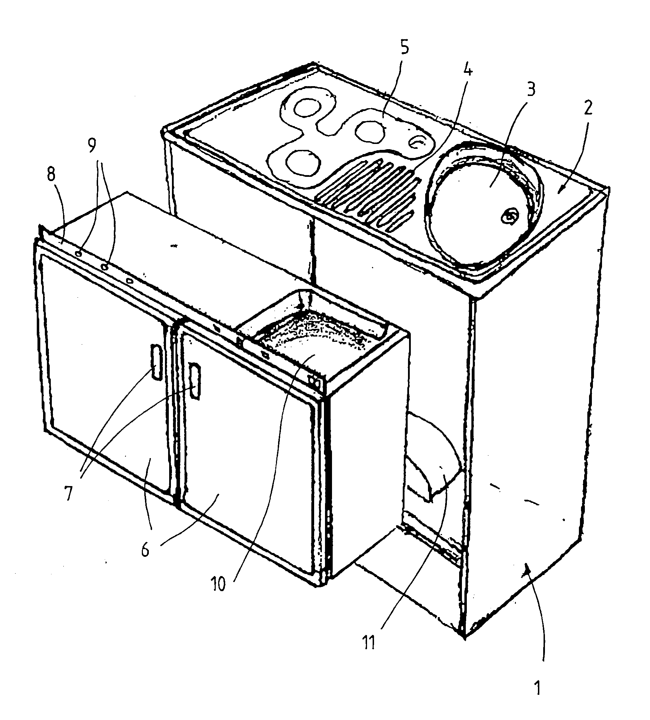

Weitere Vorteile und Merkmale der Erfindung ergeben sich aus der folgenden Beschreibung der Zeichnung, die einen Kühlschrank für einen im Bereich des Radkastens angeordneten Küchenblock in einer perspektivischen Ansicht zeigt.

Der in der Zeichnung dargestellte Kühlschrank ist als Unterbauschrank ausgebildet. Er läßt sich in einen Küchenblock 1 einsetzen, der eine als Spülen-Kocherkombination ausgebildete Arbeitsplatte 2 mit einem Spülbecken 3, einem geriffeltem Abtropfbereich 4 und einem Kochfeld 5 aufweist. Der Kühlschrank ist frontseitig mit einer Doppeltür versehen, deren beide Türblätter 6 mittig aneinanderstoßen. Die Türblätter 6 sind an ihrer Unterseite an dem Kühlschrank angelenkt und lassen sich gegensinnig öffnen. Zu diesem Zweck sind sie jeweils im Bereich ihrer aneinanderstoßenden Seiten mit Griffmulden 7 versehen.

Die Türblätter 6 weisen eine nahezu quadratische Form auf und decken die gesamte Frontseite des dadurch breiter als höher ausgebildeten Kühlschranks ab. Bei einem Innenvolumen von ca. 130 bis 150 l beträgt das Verhältnis von Breite zu Höhe im vorliegenden Fall 2 : 1.

An der Frontseite ist der Kühlschrank oberhalb der Doppeltür mit einer Befestigungsleiste 8 versehen, die außer zur Befestigung auch zur Aufnahme von Bedienelementen, etwa für das Kochfeld 5 des Küchenblocks 1, dient und daher mehrere Öffnungen 9 aufweisen kann. Um den Kühlschrank möglichst dicht an der Unterseite der Arbeitsplatte 2 anzuordnen, ist die Oberseite des Kühlschranks mit einer Ausnehmung 10 versehen, die das an der Unterseite der Arbeitsplatte 2 herausragende Spülbecken 3 aufnimmt.

Der Innenraum des Kühlschranks wird durch eine Kältemaschine gekühlt, die je nach Anforderung für eine Kälteleistung zwischen 80 und 2000 kJ/h ausgelegt sein kann. Als Kühlmaschine kann der Kühlschrank entweder mit einem Absorber oder einem Kompressoraggregat, bei dem der Kompressor mit dem antreibenden Elektromotor in einem Gehäuse untergebracht und dadurch hermetisch gekapselt sind, ausgerüstet sein. Alternativ kann die Kühlung auch thermoelektrisch durch Peltierelemente erfolgen. Der Kondensator des Kühlschranks, in dem die abgeführte Wärme anfällt, ist luftgekühlt und besteht aus Rippenrohren, die sich an der Rückseite des Kühlschranks befinden. Der im oberen Bereich des Innenraums angeordnete Verdampfer des Kühlschranks ist in bekannter Weise als Tiefkühlfach ausgebildet, das mit einer Klappe verschließbar und je nach Anwendung als Ein-, Zwei- oder Drei-Stern-Fach, das heißt für die Temperaturen - 6°C, -12°C oder - 18°C, ausgelegt ist.

Der Innenraum des Kühlschranks kann ferner so gestaltet sein, daß durch eine entsprechende Anordnung des Kühlaggregates im Inneren Zonen mit unterschiedlichen Temperaturen entstehen.

Im Inneren des durch einen Polystyrolschaumstoff wärmeisolierten Kühlschrankgehäuses befinden sich zwei Lichtschalter, die bei Öffnen der Tür betätigt werden und die Innenbeleuchtung des Kühlschranks schalten. Im Inneren des Kühlschranks befindet sich ferner ein Temperaturregler, der mit einer Abtauautomatik versehen sein kann. Die für die Kühlmaschine und die elektrische Innenbeleuchtung erforderlichen Anschlüsse des Kühlschranks sind auf der Seite herausgeführt, wodurch sich ein einfacher Einbau des Kühlschranks, beispielsweise in ein Wohnmobil oder Caravan, ergibt.

Der zuvor beschriebene Kühlschrank zeichnet sich durch eine großvolumige und geräumige Innenaufteilung bei geringen Abmessungen aus. Dies ist vornehmlich darauf zurückzuführen, daß er eine im Vergleich zur Breite sehr geringe Höhe aufweist. Damit werden in besonderem Maße den Anforderungen für Wohnmobile oder Caravans Rechnung getragen, indem sich der Kühlschrank aufgrund seiner geringen Einbauhöhe auch im Bereich von Radkästen 11 anordnen läßt, wie der Zeichnung deutlich zu entnehmen ist. Die auf diese Weise erzielte hohe Aufstellvariabilität für den Küchenblock 1 trägt nicht zuletzt auch zu einer hohen Betriebssicherheit und langen Lebensdauer bei.

### Bezugszeichenliste

- 1: Küchenblock
- 2: Arbeitsplatte
- 3: Spülbecken
- 4: Abtropfbereich
- 5: Kochfeld
- 6: Türblatt
- 7: Griffmulde
- 8: Befestigungsleiste
- 9: Öffnung
- 10: Ausnehmung
- 11: Radkasten

## Patentansprüche

1. Kühlschrank für Wohnwagen,
**dadurch gekennzeichnet**,
daß dessen Breite größer ist als dessen Höhe und daß dieser frontseitig eine Doppeltür (6) aufweist.

2. Kühlschrank nach Anspruch 1, dadurch gekennzeichnet, daß die Doppeltüren (6) aneinanderstoßend ausgebildet sind.

3. Kühlschrank nach einem der vorhergehenden Ansprüche, dadurch gekennzeichnet, daß die Doppeltüren (6) an der Unterseite am Kühlschrank angelenkt sind.

4. Kühlschrank nach einem der vorhergehenden Ansprüche, dadurch gekennzeichnet, daß an jeder der Türen (6) ein Lichtschalter angeordnet ist.

5. Kühlschrank nach einem der vorhergehenden Ansprüche, dadurch gekennzeichnet, daß dieser Energieanschlüsse an einer Seitenwandung aufweist.

6. Kühlschrank nach einem der vorhergehenden Ansprüche, dadurch gekennzeichnet, daß seine Oberseite mit Ausnehmungen (10) zur Aufnahme an der Unterseite einer Arbeitsplatte (2) herausragender Bauteile (3) versehen ist.

7. Kühlschrank nach einem der vorhergehenden Ansprüche, gekennzeichnet durch eine frontseitige Befestigungsleiste (8).

8. Kühlschrank nach einem der vorhergehenden Ansprüche, gekennzeichnet durch die Ausbildung als Einbau- oder Unterbauschrank.
